# EUROPÄISCHE PATENTSCHRIFT

(11) **EP 0 354 469 B1**
(45) Veröffentlichungstag und Bekanntmachung des Hinweises auf die Patenterteilung: **05.05.1993**
(21) Anmeldenummer: 89114321.6
(22) Anmeldetag: 03.08.1989
(51) Int. Cl.: B65G 57/112, B65G 47/31

(54) **Verfahren und Einrichtung zum gruppenweisen Stapeln von Stapelelementen**
Method and device for stacking stackable elements in groups
Procédé et installation pour empiler en groupe des éléments à empiler

(30) Priorität: 10.08.1988 DE 3827063
(43) Veröffentlichungstag der Anmeldung: 14.02.1990
(73) Patentinhaber: Schäfer & Flottmann Gmbh & Co. KG, D-58285 Gevelsberg (DE)
(72) Erfinder: Klingenberg, Uwe, D-5820 Gevelsberg (DE); Dabruck, Hanspeter, D-5820 Gevelsberg 14 (DE); Flottmann, Heinrich, D-5820 Gevelsberg 14 (DE)
(74) Vertreter: Schumacher, Bernd, Dipl.-Ing.

(56) Entgegenhaltungen:
- DE-A- 3 529 071

## Beschreibung

Die Erfindung betrifft ein Verfahren gemäß dem Oberbegriff von Anspruch 1 und eine hierfür dienende Einrichtung gemäß dem Oberbegriff von Anspruch 13.

Bei den bekannten Verfahren und Einrichtungen zum gruppenweisen Stapeln bzw. Sammeln von Stapelelementen werden diese ruckweise intermittierend bewegt und umgelenkt. Diese Betriebsweise und die damit verbundene Belastung der Stapelelemente begrenzt stark die maximale Betriebs- bzw. Verarbeitungsgeschwindigkeit.

Der vorliegenden Erfindung liegt die Aufgabe zugrunde, ein Verfahren und eine Einrichtung der genannten Art so auszubilden, daß sich bei schonender Behandlung der Stapelelemente große Stapelungsleistungen erzielen lassen.

Zur Lösung der gestellten Aufgabe zeichnet sich ein Verfahren gemäß dem Oberbegriff des Anspruchs 1 erfindungsgemäß durch die im Kennzeichen dieses Anspruchs aufgeführten Merkmale aus.

Ein solches Verfahren ermöglicht ein sehr schnelles und schonendes stapelndes Sammeln von Stapelelementen, die auf in Transportrichtung schräg ansteigenden Bewegungsbahnen angehoben und unter entsprechender Verlangsamung ihrer Horizontalgeschwindigkeit gestapelt werden. Der kontinuierliche Durchlauf vermeidet weitgehend jegliche Stoßbelastungen der Stapelelemente, die ihrerseits fortlaufend ohne einen ruckweisen Betrieb wie beim Stand der Technik behandelt werden können. Eine solche Betriebsweise ist schnell, sicher und schonend.

Die Weiterbildungen der Ansprüche 2 und 3 ermöglichen eine Anpassung der dritten Horizontalgeschwindigkeit insbesondere an die Anzahl der pro Stapel erwünschten Stapelelemente. Hierdurch wird erreicht, daß die fertigen Stapel gegenseitig nicht zu weit beabstandet sind und somit eine raumsparende Betriebsweise erzielt wird.

Die Weiterbildung von Anspruch 4 vereinfacht das Verfahren insofern, als ein Erfassen der Stapelelemente nur an einer definierten Übergabestelle erfolgt. Ein Erfassen mehrerer Stapelelemente an verschiedenen Stellen wäre komplizierter.

Die Weiterbildung von Anspruch 5 stellt sicher, daß alle Stapelelemente am Ende der definierten Hubstrecke ihre jeweilige Stapelhöhe erreicht haben, wodurch sich ein übersichtlicher Verfahrensablauf ergibt.

Die Weiterbildung von Anspruch 6 führt zu einem definierten Verfahrensablauf, da die Stapelelemente von ihrer endseitigen horizontalen Bewegungsbahn einfacher zu stapeln sind.

Die Weiterbildung von Anspruch 7 führt zu einer Reduzierung der Beanspruchung der Stapelelemente insbesondere bei schnellem Betriebsablauf, weil die vertikalen Bewegungsübergänge gedämpft erfolgen. Außerdem kann die Betriebsgeschwindigkeit vergrößert werden, ohne daß die Gefahr einer trägheitsbedingten Störung besteht.

Die Weiterbildung von Anspruch 8 ermöglicht einen kontinuierlichen Betriebsablauf mit gleichzeitiger Behandlung mehrerer Stapelelemente, selbst wenn diese unterschiedlichen Stapelgruppen angehören und somit unterschiedlichen Stapeln zuzuführen sind. Diese stapelverschachtelte Betriebsweise vergrößert die Betriebsgeschwindigkeit.

Die Weiterbildung von Anspruch 9 führt zu vergleichsweise flach ansteigenden Bewegungsbahnen der Stapelelemente mit dem Ergebnis einer noch größeren Schonung derselben und einer weiteren Vergrösserbarkeit der Betriebsgeschwindigkeit.

Die Weiterbildung von Anspruch 10 erlaubt durch verschachtelte Stapelbildung eine sehr schnelle Betriebsweise auf engem Raum.

Gemäß der Weiterbildung von Anspruch 11 können die fertigen Stapel in definierter Weise weitertransportiert werden.

Die Weiterbildung von Anspruch 12 ermöglicht eine bedarfsgerechte Anpassung der Betriebsabläufe an die Größe und Anzahl der Stapelelemente.

Zur Lösung der gestellten Aufgabe zeichnet sich ferner eine Einrichtung der im Oberbegriff von Anspruch 13 genannten Art erfindungsgemäß durch die im Kennzeichen dieses Anspruchs aufgeführten Merkmale aus. Der oder die vorzugweise beiderseits der Transportgasse befindlichen Schrägförderer ermöglichen ein schnelles, schonendes und bedarfsgerechtes Anheben der Stapelelemente, um diese dann mit den nachfolgenden Mitteln übereinander zu führen, zu verlangsamen und zu stapeln. Eine solche Einrichtung ist vergleichsweise einfach und erlaubt bei äußerst schonender Materialbehandlung sehr große Betriebsgeschwindigkeiten.

Die Weiterbildung von Anspruch 14 ermöglicht mit sehr einfachen Mitteln ein seitlich unterstützendes Erfassen und Anheben der einzelnen Stapelelemente. Dabei ermöglicht die Weiterbildung von Anspruch 15 ein bedarfsgerechtes vertikales Führen mittels verschiebbarer Schlitten während der horizontalen Weiterbewegung.

Mit der Weiterbildung von Anspruch 16 kann sichergestellt werden, daß die Stapelelemente auch unter dem Einfluß großer Betriebsgeschwindigkeiten sicher auf den Hubtischen gehalten werden, was wichtig ist, da sie sich während der Hubbewegung innerhalb einer von außen nicht ohne weiteres zugänglichen Transportgasse befinden.

Die Weiterbildung von Anspruch 17 beinhaltet ein einfaches Mittel zum Halten und horizontalen Bewegen geeigneter Führungsglieder für die Schlitten. Bei der bevorzugten Ausführungsform werden die Führungsglieder endseitig an je einer Transportkette befestigt, um einen besonders stabilen Gesamtaufbau zu erzielen.

Die Weiterbildung von Anspruch 18 gewährleistet eine einfache und sichere mechanische Hubsteuerung der Schlitten bzw. Hubtische. Grundsätzlich könnten diese auch in anderer Weise, wie pneumatisch, hydraulisch oder elektromechanisch, bewegt werden. Die stationären, jedoch verstellbaren, Führungsbahnen an den einzelnen Schrägförderern sind jedoch hervorragend geeignet, um einen synchronen Betrieb der jeweils einem Stapelelement zugeordneten Hubtische der beiden Schrägförderer zu gewährleisten. Hierzu ist es lediglich erforderlich, beide Schrägförderer gleich schnell anzutreiben.

Mit der Weiterbildung von Anspruch 19 können die aufeinanderfolgenden Hubtische jeweils von unten beginnend steiler werdenden Führungsbahnen zugeordnet werden, um dann in unterschiedlich hoch gelegene horizontale Endabschnitte zu gelangen. Die verschwenkbaren Anfangsabschnitte der Führungsbahnen stellen eine Art Steuerventile für die Bewegungsabläufe dar.

Die Weiterbildung von Anspruch 20 vermeidet ruckartige Bewegungsübergänge und gewährleistet somit besonders große Betriebsgeschwindigkeiten.

Gemäß der Weiterbildung nach Anspruch 21 können die Führungsrollen auf die entsprechenden Führungsbahnen gelenkt werden.

Mit der Weiterbildung von Anspruch 22 wird sichergestellt, daß die Hubtische bei ihrer an der Rückseite der Schrägförderer erfolgenden Rückführung zum Anfang der Transportgasse wieder auf das anfängliche Niveau abgesenkt werden, was im einfachsten Fall durch Schwerkraft erfolgt.

Mit der bevorzugten Weiterbildung von Anspruch 23 und 24 ist eine einfache Anpassung der Einrichtung an unterschiedlich hohe Stapelelemente möglich.

Die Weiterbildung von Anspruch 25 stellt ein einfaches und günstiges Mittel dar, um eine exakte Stapelbildung vorzusehen, indem die Stapelelemente nach Übereinanderführung abgebremst und von den Hubtischen geschoben werden, um dann im Stapel mittels des etwas schneller bewegten Fördergliedes an den Anschlaggliedern gehalten zu werden, bis die Stapel hiervon freigegeben und mit dem Förderglied frei mitbewegt werden.

Die Weiterbildung von Anspruch 26 stellt sicher, daß bereits eine neue Stapelbildung erfolgen kann, wenn die vorherige noch nicht abgeschlossen ist. Anderenfalls, das heißt bei nicht vertikal bewegbaren Anschlaggliedern, würden diese momentan jeweils nur einen einzigen Stapelvorgang zulassen.

Die Weiterbildungen der Ansprüche 27 und 28 ermöglichen einen Vertikal- bzw. Hubantrieb der Anschlagglieder der dynamischen Anschlagvorrichtung ähnlich wie bei den Hubtischen der Schrägförderer. Bei der dynamischen Anschlagvorrichtung ist jedoch nur eine Führungsbahn für alle Anschlagglieder vorhanden, weil diese hinsichtlich ihrer Höhe gleichartig zu bewegen sind.

Mit der Weiterbildung von Anspruch 29 kann erreicht werden, daß die Anschlagglieder bei ihrer endseitigen Umlenkung infolge der Arme beschleunigt werden und sich somit von den Stapeln trennen, so daß diese freigegeben werden und sich mit dem Förderer weiterbewegen.

Die Weiterbildung von Anspruch 30 ermöglicht eine beispielsweise schwerkraftbedingte Rückführung der Anschlagglieder auf ihr anfängliches Höhenniveau.

Wenn gemäß der Weiterbildung von Anspruch 31 zwei dynamische Anschlagvorrichtungen vorhanden sind, werden eine exakte Stapelbildung gefördert und ein Schrägstellen der Stapel sicher vermieden. Dieses setzt selbstverständlich eine Synchronisation der beiden dynamischen Anschlagvorrichtungen voraus.

Mit der Weiterbildung von Anspruch 32 ist es in einfacher Weise möglich, eine exakte Einzelzuführung der Stapelelemente zu den einzelnen Hubtischen sicherzustellen.

Ein synchronisierter Antrieb aller wesentlicher Teile gemäß der Weiterbildung von Anspruch 33 stellt einen einwandfreien Betrieb der Einrichtung sicher.

Die Weiterbildung von Anspruch 34 ermöglicht jederzeit eine breitenmäßige Anpassung der Einrichtung an die jeweils zu sammelnden Stapelelemente.

Die Erfindung wird nachfolgend unter Bezugnahme auf zeichnerisch dargestellte Ausführungsbeispiele näher erläutert. Es zeigen:
- Figur 1 -: die Einrichtung nach der vorliegenden Erfindung in einer schematischen Seitenansicht,
- Figur 2 -: die Einrichtung nach der vorliegenden Erfindung in einer schematischen Draufsicht,
- Figur 3 -: in einer geschnittenen Detailansicht eines Schrägförderers einen Hubtisch sowie dessen Führung,
- Figur 4 -: in einer geschnittenen Detailansicht einer dynamischen Anschlagvorrichtung ein Anschlagglied sowie dessen Führung und
- Figur 5 -: in einer schematischen Seitenansicht mehrere Führungsbahnen eines Schrägförderers.

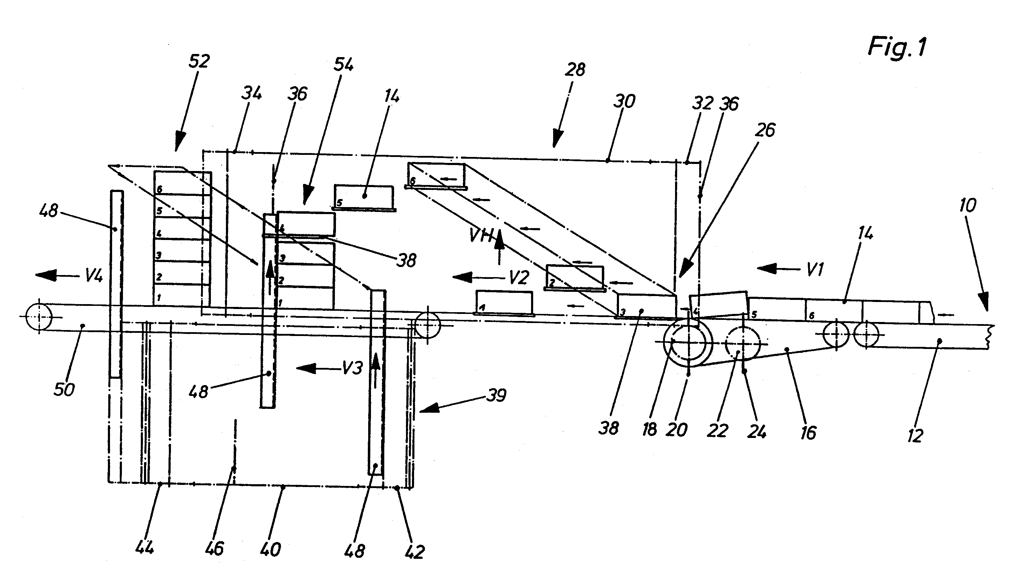

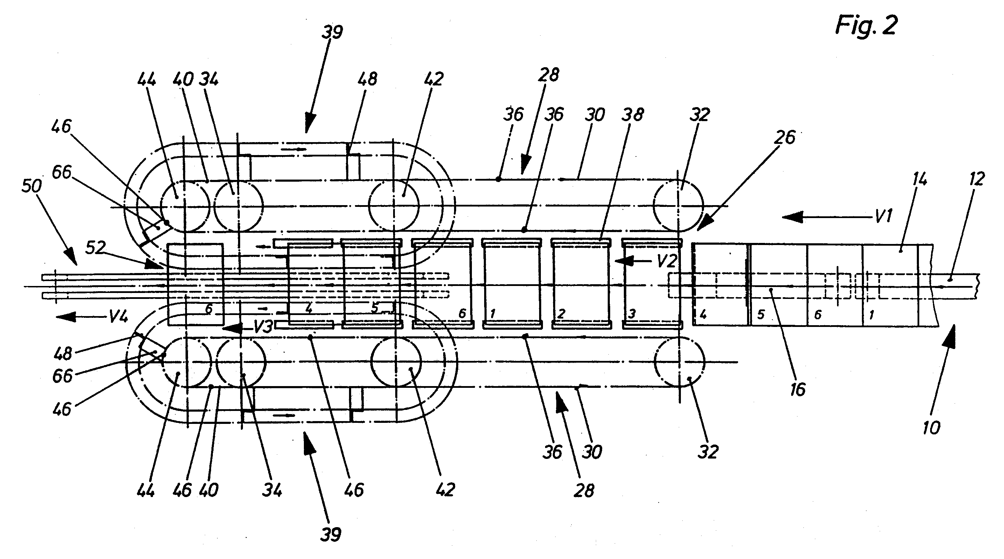

Gemäß den Figuren 1 und 2 sind in einer einreihigen Transportlinie 10 auf einem Förderglied 12, wie einem Förderband, Stapelelemente 14 unmittelbar hintereinander angeordnet. Es sei angenommen, daß sie sich mit einer ersten Horizontalgeschwindigkeit v₁ in der Transportrichtung bewegen. Um einen kontinuierlichen Betrieb zu gewährleisten, sollten stets genügend Stapelelemente 14 auf dem Förderglied 12 vorhanden sein, anderenfalls wird der Betrieb der erfindungsgemäßen Einrichtung gestoppt. Die Stapelelemente 14 stehen seitlich über das Förderglied 12 über, damit sie in noch zu beschreibender Weise erfaßt werden können.

Zunächst gelangen die Stapelelemente 14 von dem Förderglied auf ein nachgeschaltetes, etwas schneller laufendes Förderglied bzw. -band 16 einer Vereinzelungs- und Übergabevorrichtung. Diese besitzt ferner umlaufende Rollen 18 und 22 mit geeigneten, diametral vorstehenden Anschlagnocken 20 bzw. Hubnocken 24. Die Vereinzelungs- und Übergabevorrichtung sorgt dafür, daß die Stapelelemente 14 vereinzelt und in geeigneter Weise an einer Übergabestelle 26 in eine Transportgasse zwischen zwei seitlich nebeneinander angeordneten gleichartigen Schrägförderern 28 gelangen, um von diesen weiterbewegt und angehoben zu werden. Die Weiterbewegung erfolgt mit einer zweiten Horizontalgeschwindikeit v₂, die etwas größer als v₁ sein kann. Die Hubbewegung erfolgt mit einer Hubgeschwindigkeit v_{H}, deren Betrag kleiner als derjenige von v₂ sein kann, damit sich nicht zu steile Hubbahnen und damit nicht zu große Belastungen der Stapelelemente 14 ergeben.

Jeder Schrägförderer 28 besitzt obere und untere endlose Transportketten 30, die um endseitige Kettenräder 32 und 34 verlaufen. Alle Transportketten 30 werden in Pfeilrichtung gleich schnell angetrieben. Bei jedem Schrägförderer 28 erstrecken sich zwischen den oberen und unteren Transportketten stangenförmige Führungsglieder 36, die an den Transportketten 30 befestigt sind und von diesen horizontal mitgenommen werden. In den Figuren sind nur einige Führungsglieder angedeutet - tatsächlich sind sie unter gegenseitigem Abstand um den gesamten Umfang des Schrägförderers 28 verteilt.

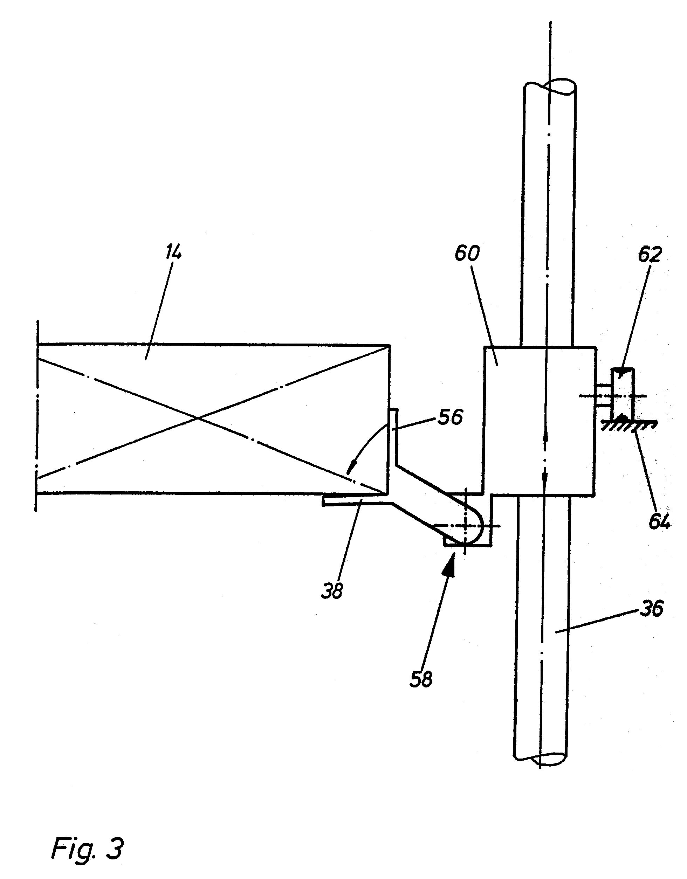

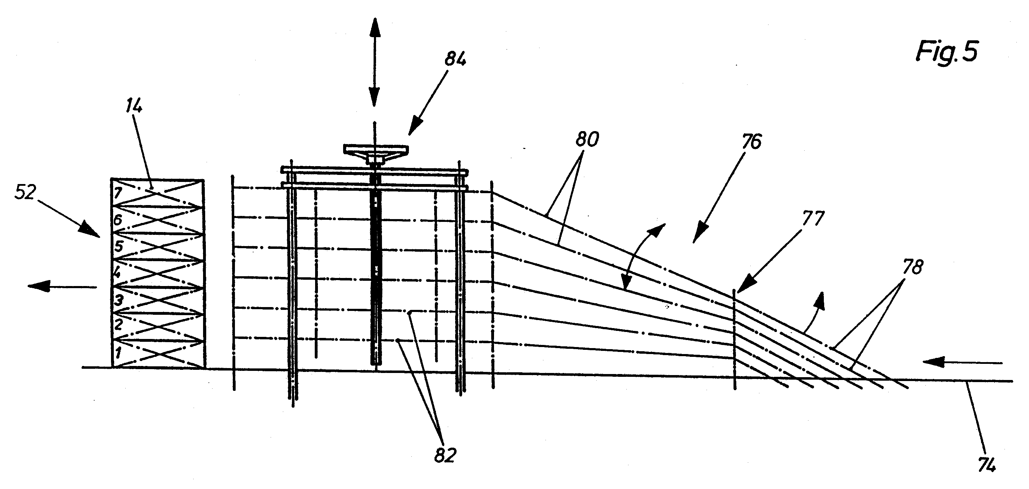

Die stangenförmigen Führungsglieder 36 der Schrägförderer 28 dienen zum vertikalen Bewegen von Hubtischen 38, die über noch zu erläuternde und aus Figur 3 ersichtliche Mittel an den Führungsgliedern 36 vertikal geführt sind und von den Führungsgliedern 36 in Horizontalrichtung mitgenommen werden. In Figur 2 ist an einer Stelle lediglich angedeutet, daß die Hubtische 38 mit den Führungsgliedern 36 gekoppelt sind. Unter späterer Bezugnahme auf die Figuren 3 und 5 wird noch näher erläutert, wie die Hubtische 38 bei ihrer in Transportrichtung erfolgenden Bewegung durch die Transportgasse der Schrägförderer 28 von einem anfänglichen unteren Niveau im Bereich der Übergabestelle 26 auf die jeweilige Stapelhöhe der Stapelelemente 14 hochbewegt werden.

Gemäß Figur 1 gehören z.B. sechs Stapelelemente 14, die mit 1 bis 6 bezeichnet sind, zu einer Stapelgruppe (es kann auch eine andere Anzahl gewählt werden). Wie es aus Figur 1 ersichtlich ist, werden die Stapelelemente 14 an der Übergabestelle 26 vereinzelt auf die gleichzeitig in die Transportgasse eingeschwenkten Hubtische 38 der beiden Schrägförderer 28 geschoben. Der Hubtisch mit dem jeweils ersten Element 1 der Stapelgruppe wird lediglich weiterbewegt und nicht angehoben. Der Hubtisch mit dem nächsten Element 2 der Stapelgruppe wird etwa um die Höhe eines Stapelelements angehoben. Auf diese Weise werden nacheinander alle Elemente 1 bis 6 der Stapelgruppe auf unterschiedliche Höhen- bzw. Stapelniveaus gebracht.

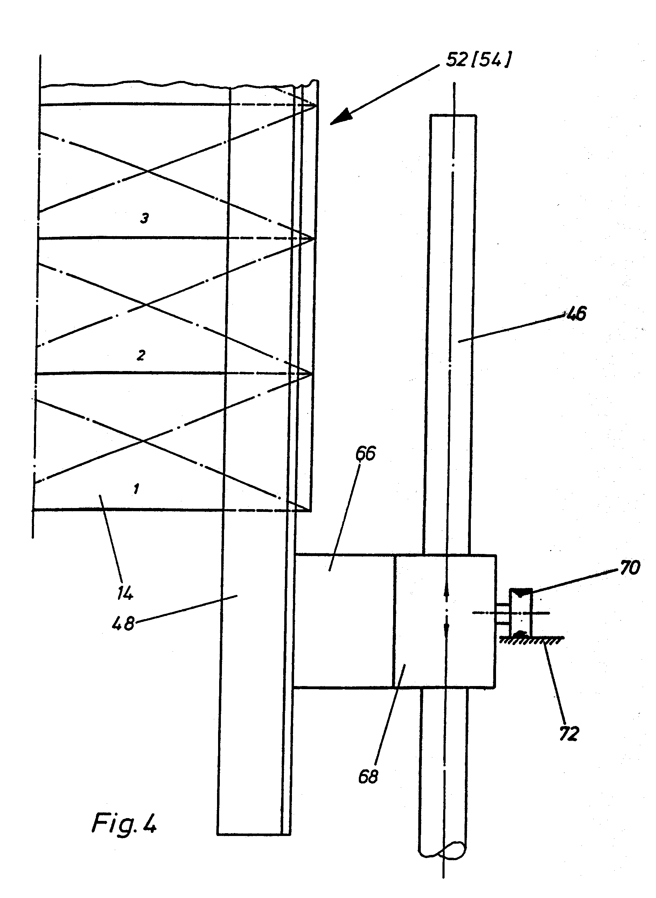

Im Endbereich der Schrägförderer 28 befindet sich unter diesen an jeder Seite der Transportgasse eine dynamische Anschlagvorrichtung 39. Jede dieser Vorrichtungen weist zwei endlose Transportketten 40 auf, die wie bei den Schrägförderern 28 um endseitige Kettenräder 42, 44 horizontal umlaufen und durch umfangsmäßig verteilte, vertikal angeordnete stangenförmige Führungsglieder 46 verbunden sind. Diese dienen wie die Führungsglieder 36 der Schrägförderer 28 zum horizontalen Antreiben sowie vertikalen Führen von Teilen, nämlich im vorliegenden Fall von vertikalen, langgestreckten Anschlaggliedern 48. In den Figuren 1 und 2 ist schematisch dargestellt, daß die Anschlagglieder 48 mit den Führungsgliedern 46 gekoppelt sind. Dieses wird unter Bezugnahme auf Figur 4 noch näher erläutert.

Beim synchronen Umlauf der Transportketten 40 in Pfeilrichtung werden die Anschlagglieder 48, die über Arme 66 mit den Führungsgliedern 46 gekoppelt sind, mitgenommen und am Anfang der dynamischen Anschlagvorrichtungen 39 gemäß Figur 1 von unten nach oben in den Bewegungspfad der Stapelelemente 14 bewegt. Während der horizontale Umlauf mit einer dritten Horizontalgeschwindigkeit v₃ erfolgt, die kleiner als v₂ ist, erfolgt die Hubbewegung der Anschlagglieder 48 jeweils nur so schnell bzw. so weit, daß das gerade ankommende Stapelelement einer Stapelgruppe gebremst wird, ohne jedoch die darüber bewegten Stapelelemente der vorherigen Stapelgruppen zu beeinflussen. Dadurch können mehrere Stapel gleichzeitig gebildet werden.

Im Bereich der dynamischen Anschlagvorrichtungen 39 sorgt ein weiteres Förderglied 50, wie ein Förderband oder Förderketten, für eine Abstützung und einen Weitertransport der fertigen bzw. zu bildenden Stapel 52, 54. Das Förderband 50 bewegt sich mit einer vierten Horizontalgeschwindigkeit v₄, die etwas größer als v₃ ist. Wenn die einzelnen Stapelelemente 14 gegen die Anschlagglieder 48 gelangen und von diesen abgebremst werden, bewegen sich die Hubtische 38 unter den Stapelelementen 14 hinweg. Auf diese Weise wird das erste Element 1 einer Stapelgruppe auf dem Förderer 50 abgesetzt und durch dessen höhere Geschwindigkeit am Anschlagglied 48 gehalten. Wenn dann das zweite Elemente 2 derselben Stapelgruppe gegen dasselbe, inzwischen weiter angehobene Anschlagglied 48 gelangt und vom Hubtisch 38 freigegeben wird, setzt es sich auf dem ersten Element 1 der Stapelgruppe ab. Entsprechendes erfolgt mit den nächsten Stapelelementen 14 dieser Stapelgruppe, bis der vollständige Stapel 52 fertiggestellt ist. Vor der Fertigstellung wird bereits der nächste, noch nicht fertige Stapel 54 begonnen.

Nach Fertigstellung eines Stapels 52 wird das dann horizontal geführte Anschlagglied 48 im Bereich der endseitigen Umlenkung durch die Arme 66 beschleunigt, so daß der Stapel 52 freigegeben wird und vom Förderer 50 nunmehr ohne Abbremsung durch das Anschlagglied 48 mit v₄ weiterbewegt werden kann. Die aus der Transportgasse geschwenkten Anschlagglieder 48 können dann durch Schwerkraft oder andere Hilfsmittel wieder auf ihr Anfangsniveau abgesenkt werden, um beim erneuten Einschwenken in die Transportgasse wiederum von unten nach oben bewegt zu werden, was noch näher erläutert wird.

Aus Figur 3 ist ersichtlich, daß die nur halbseitig dargestellten Stapelelemente 14 an jeder Seite von den Hubtischen 38 unterstützt werden, die im vorliegenden Fall einen vertikalen Hubtischabschnitt 56 aufweisen und über eine Anlenkung 58 mit einem Schlitten 60 verbunden sind. Der letztere ist an wenigstens einem der Führungsglieder 36 gehalten und längs dessen vertikal verschiebbar. Die Anlenkung 58 ermöglicht es, daß die Hubtischabschnitte 56 infolge des Eigengewichts der Stapelelemente 14 gegen deren Seiten gedrückt werden. Die somit beiderseits schwerkraftbedingt eingespannten Stapelelemente 14 sind damit sicher gehalten und können nicht ungewollt verrutschen. Die Schlitten 60 tragen an ihrer Rückseite jeweils eine Führungsrolle 62, die mit geeigneten Führungsbahnen 64 zum Anheben der Hubtische 38 in Eingriff treten kann. Dieses wird unter Bezugnahme auf Figur 5 noch näher erläutert.

Aus Figur 4 ist ersichtlich, daß die Anschlagglieder 48 der dynamischen Anschlagvorrichtungen 39 über die Arme 66 mit Schlitten 68 verbunden sind, welche ihrerseits an den Führungsgliedern 46 vertikal verschiebbar gehalten sind. An ihren Rückseiten tragen die Schlitten 68 jeweils eine Führungsrolle 70, die mit einer geeigneten Führungsbahn 72 zum Anheben der Anschlagglieder 48 in Eingriff treten kann. Aus Figur 4 ist ferner ersichtlich, daß die Elemente 1, 2, 3 usw., das heißt die einzelnen Stapelelemente 14, zu einem Stapel 52 (fertig) bzw. 54 (noch nicht fertig) gestapelt werden können und beiderseits der Transportgasse an Anschlaggliedern 48 zur Anlage kommen, während das erste Elemente 1 der Stapelgruppe auf dem Förderer 50 aufliegt.

In Figur 5 ist schematisch dargestellt, wie die Hubtische 38 der Schrägförderer 28 mittels geeigneter Führungsbahnen während ihrer horizontalen Weiterbewegung vertikal angehoben werden können. Diese Führungsbahnen sind in Figur 3 angedeutet und mit 64 bezeichnet. Sie sind Bestandteil einer Bahnführungsanordnung 76 aus Figur 5, zu der mehrere, unterschiedlich steile Führungsbahnen der genannten Art gehören. Jede Führungsbahn 64 besteht aus drei Abschnitten, nämlich einem um eine Schwenkachse 77 schwenkbaren Anfangsabschnitt 78, ferner einem sich unmittelbar anschließenden, ebenfalls um die Schwenkachse 77 schwenkbaren Mittelabschnitt 78 und einem sich hieran anschließenden, horizontalen, vertikal verstellbaren Endabschnitt 82. Die letzteren haben einen gegenseitigen vertikalen Abstand, der etwa der Höhe der Stapelelemente 14 entspricht. Sie können mittels einer Verstellvorrichtung 84 gleichzeitig vertikal verstellt und der jeweiligen Höhe der Stapelelemente 14 angepaßt werden. Bei der Höhenverstellung der Endabschnitte 82 werden die Mittelabschnitte 80 mitgenommen und jeweils um die Schwenkachsen 77 geschwenkt, was durch einen entsprechenden Pfeil angedeutet ist. Die Anfangsabschnitte 78 greifen im vorliegenden Fall unter ein Anfangsniveau 74, das etwa dem Höhenniveau der Übergabestelle 26 entspricht. Wenn sich die Hubtische 38 in Pfeilrichtung bewegen, gelangen die rückwärtigen Führungsrollen 62 der Schlitten 60 gegen und auf den ersten nach unten geschwenkten Anfangsabschnitt 78 der Führungsbahn 64, um hiervon angehoben und auf die entsprechenden Mittel- sowie Endabschnitte 80, 82 geleitet zu werden. Die Endabschnitte 78 können in Pfeilrichtung aus dem Bewegungspfad der Führungsrollen 62 nach oben geschwenkt werden, so daß sie eine entsprechende Höhensteuerung der einzelnen Stapelelemente 14 vornehmen können. Anfänglich sind alle Anfangsabschnitte 78 hochgeschwenkt, so daß das erste Element 1 einer Stapelgruppe auf dem Ausgangsniveau 74 verbleibt und im späteren Stapel 52 unten angeordnet ist. Für das Element 2 der Stapelgruppe wird der nächste Anfangsabschnitt 78 nach unten geschwenkt, der in Figur 5 am weitesten links unter das Anfangsniveau 74 greift und das Element 2 auf die nächste Stapelhöhe bringt. Für die weiteren Elemente (im vorliegenden Beispiel Elemente 3 bis 7) der Stapelgruppe werden nacheinander die nächsten Anfangsabschnitte nach unten geschwenkt.

Aus Figur 5 ist ersichtlich, daß der höchste Endabschnitt 82 etwas höher angeordnet ist als die Unterseite des letzten Elements 7 des Stapels 52. Das liegt daran, daß beim Absetzen der Stapelelemente 14 im Stapel 52 unter anderem durch Wegfallen der Hubtische 38 eine gewisse Absenkung erfolgt. Bei der in Figur 5 dargestellten Situation sind alle Anfangsabschnitte 78 abgesenkt, was bedeutet, daß zuletzt das letzte Element 7 des Stapels 52 angehoben wurde.

Die Führungsbahnen 64 der Bahnführungsanordnung 76 bzw. deren Endabschnitte 82 können am Ende der Transportgasse enden. Bei ihrer rückseitigen Rückführung können die Hubtische 38 mit den Schlitten 60 durch Schwerkrafteinfluß oder durch zusätzliche, nicht dargestellte Führungsbahnen wieder auf das Anfangsniveau an der Übergabestelle 26 nach unten bewegt werden.

Demgegenüber haben die dynamischen Anschlagvorrichtungen 39 für alle Anschlagglieder 48 bzw. für die Führungsrollen 70 jeweils nur eine in Transportrichtung ansteigende Führungsbahn 72, die gemäß der strichpunkierten Darstellung in Figur 1 für die Bewegungsbahn der Anschlagglieder 48 endseitig in eine horizontale Führung übergeht. Diese endet nach dem Trennvorgang an dem fertigen Stapel 52 im Bereich der endseitigen Umlenkung oder danach. Bei der rückwärtigen Rückführung der Anschlagglieder 48 können diese dann durch Schwerkraft oder zusätzliche, nicht dargestellte Führungsbahnen auf das Anfangsniveau am Eingang der dynamischen Anschlagvorrichtungen 39 nach unten bewegt werden. Die beiden Führungsbahnen 72 der dynamischen Anschlagvorrichtung 39 sind wie die mehrfachen Führungsbahnen 64 der Schrägförderer 28 stationär, jedoch neigungsvariabel, um eine Anpassung an die Höhe der Stapelelemente und deren Anzahl pro Stapelgruppe vornehmen zu können.

Vorzugsweise ist der gegenseitige Abstand zwischen den benachbarten Hubtischen 38 bzw. den Schrägförderern 28 und gegebenenfalls auch der gegenseitige Abstand der benachbarten Anschlagglieder 48 bzw. der dynamischen Anschlagvorrichtungen 39 einstellbar, damit unterschiedlich breite Stapelelemente 14 stapelnd gesammelt werden können.

Als Hubantriebe für die Hubtische 38 bzw. deren Schlitten 60 und/oder für die Anschlagglieder 48 bzw. deren Schlitten 68 können auch andere Mittel verwendet werden, beispielsweise Stößelantriebe oder die Schlitten 60, 68 durchdringende, drehbare Schrauben.

Mit der dargestellten Einrichtung können die Stapelelemente der Übergabestelle 26 beispielsweise mit einer Horizontalgeschwindigkeit v₁ ≈ 900 mm/sec zugeführt werden. Die Horizontalgeschwindigkeit v₂ kann etwas größer als v₁ sein. Die Anschlagglieder 48 haben bei einer Stapelbildung mit jeweils fünf Stapelelementen 14 beispielsweise eine Horizontalgeschwindigkeit v₃ ≈ 200 mm/sec. Der Förderer 50 hat eine Horizontalgeschwindigkeit v₄, die etwas grösser als v₃ ist und beispielsweise etwa 220 mm/sec beträgt. Diese sowie weitere Betriebsdaten sind den jeweiligen Erfordernissen anzupassen und zeigen, daß sich ein sehr schneller Betriebsablauf in raumsparender und schonender Weise erzielen läßt.

Grundsätzlich können auch nur ein Schrägförderer und nur eine dynamische Anschlagvorrichtung verwendet werden. Es kann dann auf eine seitlich abgeschirmte Transportgasse verzichtet werden. In diesem Fall müssen aber die Stapelelemente mit geeigneten Mitteln gehalten, wie eingeklemmt oder angesaugt, werden.

## Patentansprüche

1. Verfahren zum gruppenweisen Stapeln von in einer etwa horizontalen Transportlinie (10) hintereinander angeordneten, vorzugsweise mit einer ersten Horizontalgeschwindigkeit (v₁) aneinander angrenzend kontinuierlich vorbewegten, Stapelelementen (14), wobei schließlich das jeweils nachfolgende Stapelelement (14) einer Stapelgruppe (1 - 6) auf dem jeweils vorhergehenden Stapelelement (14) dieser Stapelgruppe (1 - 6) zu liegen kommt, **dadurch gekennzeichnet,**
a) daß jeweils die Stapelelemente (14) jeder Stapelgruppe (1 bis 6) von der Transportlinie (10) einzeln erfaßt und mit einer zweiten Horizontalgeschwindigkeit (v₂) weiterbewegt werden, die etwa der ersten Horizontalgeschwindigkeit (v₁) entspricht oder etwas größer als diese sein kann,
b) daß zumindest die auf das erste Stapelelement jeder Stapelgruppe (1 - 6) aufzubringenden Stapelelemente beim Weiterbewegen wenigstens auf ihren späteren Stapelhöhen etwa entsprechende Höhenniveaus zunehmend weiter angehoben werden
c) und daß die zweite Horizontalgeschwindigkeit (v₂) der einzelnen Stapelelemente jeder Stapelgruppe (1 - 6) entsprechend ihrer Reihenfolge zeitlich nacheinander auf eine dritte Horizontalgeschwindigkeit (v₃) reduziert wird, wobei das jeweils nachfolgende Stapelelement über das verlangsamte vorherige Stapelelement gelangt und bei exakter Übereinanderanordnung dieser Stapelelemente ebenfalls verlangsamt sowie durch Freigabe auf dem vorherigen Stapelelement abgesetzt wird.

2. Verfahren nach Anspruch 1, dadurch gekennzeichnet, daß die dritte Horizontalgeschwindigkeit (v₃) mit zunehmender Anzahl der Stapelelemente (14) einer Stapelgruppe (1 bis 6) vermindert wird.

3. Verfahren nach Anspruch 2, dadurch gekennzeichnet, daß die dritte Horizontalgeschwindigkeit (v₃) etwa der durch die Anzahl der Stapelelemente (14) einer Stapelgruppe (1 bis 6) geteilten zweiten Horizontalgeschwindigkeit (v₂) entspricht.

4. Verfahren nach einem der Ansprüche 1 bis 3, dadurch gekennzeichnet, daß die Stapelelemente (14) jeder Stapelgruppe (1 bis 6) zeitlich nacheinander an einer Übergabestelle (26) erfaßt werden.

5. Verfahren nach einem der Ansprüche 1 bis 4, dadurch gekennzeichnet, daß die Stapelelemente (14) jeder Stapelgruppe (1 bis 6) über eine bestimmte Hubstrecke mit von Stapelelement zu Stapelelement ansteigender maximaler Hubgeschwindigkeit (v_{H}) angehoben werden.

6. Verfahren nach Anspruch 5, dadurch gekennzeichnet, daß die Stapelelemente (14) nach Erreichen ihres endgültigen Höhenniveaus horizontal bewegt werden.

7. Verfahren nach Anspruch 5 oder 6, dadurch gekennzeichnet, daß die Hubgeschwindigkeit (v_{H}) der Stapelelemente (14) jeweils anfänglich allmählich gesteigert und/oder am Ende der Hubbewegung allmählich reduziert wird.

8. Verfahren nach einem der Ansprüche 1 bis 7, dadurch gekennzeichnet, daß beim Stapeln jeweils mehrere Stapelelemente (14) einer Stapelgruppe und/oder zweier aufeinanderfolgender Stapelgruppen zeitlich überschneidend gleichzeitig angehoben werden.

9. Verfahren nach einem der Ansprüche 1 bis 8, dadurch gekennzeichnet, daß die maximale Hubgeschwindigkeit (v_{H}) kleiner als die zweite Horizontalgeschwindigkeit (v₂) ist.

10. Verfahren nach einem der Ansprüche 1 bis 9, dadurch gekennzeichnet, daß bereits vor Vollendung der Stapelbildung einer Stapelgruppe (1 bis 6) eine unmittelbar benachbarte Stapelbildung der nächsten Stapelgruppe eingeleitet wird.

11. Verfahren nach einem der Ansprüche 1 bis 10, dadurch gekennzeichnet, daß die benachbarten Stapelgruppen (52) aus gestapelten Stapelelementen (14) zeitlich nacheinander mit einer vierten Horizontalgeschwindigkeit (v₄) weiterbewegt werden, die etwa der dritten Horizontalgeschwindigkeit (v₃) entsprechen oder etwas größer als diese sein kann.

12. Verfahren nach einem der Ansprüche 1 bis 11, dadurch gekennzeichnet, daß die Horizontal- und Hubgeschwindigkeiten unter Berücksichtigung der Größe der Stapelelemente (14) und ihrer Anzahl pro Stapelgruppe eingestellt und miteinander synchronisiert werden.

13. Einrichtung zum Durchführen des Verfahrens nach einem oder mehreren der Ansprüche 1 bis 12 mit Fördermitteln zum horizontalen sowie vertikalen Bewegen von in einer einreihigen Transportlinie (10) bewegten Stapelelementen (14), **gekennzeichnet**
durch einen, vorzugsweise zwei zwischen sich eine Transportgasse begrenzende, Schrägförderer (28) zum nacheinander erfolgenden s eitlichen Erfassen, zum Weiterbewegen und zum steuerbaren gleichzeitigen Anheben der vereinzelten Stapelelemente (14) jeder Stapelgruppe (1 bis 6) auf zunehmende Stapel- bzw. Höhenniveaus und durch Mittel (48, 50) zum zeitlich aufeinanderfolgenden Verlangsamen der Weiterbewegung der Stapelelemente (14) nach Erreichen ihrer jeweiligen vertikalen Stapelpositionen sowie zum Aufeinanderstapeln der Stapelelemente (14) jeder Stapelgruppe (1 - 6) durch Freigabe von den Schrägförderern (28) und zum Weitertransportieren der fertigen Stapel (52).

14. Einrichtung nach Anspruch 13, dadurch gekennzeichnet, daß jeder Schrägförderer (28) eine in sich geschlossene Reihe von horizontal und vertikal bewegbaren, gegenseitig beabstandeten Hubtischen (38) aufweist, die an den Enden des Schrägförderers (28) um vertikale Achsen in die bzw. aus der Transportgasse schwenkbar sind und die in der Transportgasse die Stapelelemente (14) seitlich unterstützen.

15. Einrichtung nach Anspruch 14, dadurch gekennzeichnet, daß jeder Hubtisch (38) an einem Schlitten (60) befestigt ist, der an zumindest einem horizontal bewegten Führungsglied (36) des Schrägförderers (28) vertikal verschiebbar gehalten ist.

16. Einrichtung nach Anspruch 15, dadurch gekennzeichnet, daß der Hubtisch (38) winkelförmig ausgebildet und an dem Schlitten (60) schwenkbar derart gehalten ist, daß ein etwa vertikaler Hubtischabschnitt (56) unter dem verschwenkenden Einfluß des Eigengewichts eines aufliegenden Stapelelements (14) mit dessen nach außen weisenden Seite in seitlichen Klemmeingriff gelangt.

17. Einrichtung nach Anspruch 15 oder 16, dadurch gekennzeichnet, daß der Schrägförderer (28) zumindest eine, vorzugsweise zwei, um endseitige Kettenräder (32, 34) horizontal umlaufende endlose Transportketten (30) aufweist, an der bzw. zwischen denen vertikale stangenförmige Führungsglieder (36) für die Schlitten (60) befestigt sind.

18. Einrichtung nach einem der Ansprüche 15 bis 17, dadurch geknnzeichnet, daß jeder Schlitten (60) wenigstens eine rückseitige Führungsrolle (62) oder dergleichen aufweist, die zumindest während des Eingriffs des Hubtisches (38) in die Transportgasse in steuerbarer Weise mit in Transportrichtung zumindest teilweise schräg ansteigenden, stationären, jedoch verstellbaren Führungsbahnen (64) des Schrägförderers (28) in Eingriff steht, wobei die Hubtische (38) jeweils von einem Niveau etwa der Transportlinie (10) auf in der Stapelgruppe (1 bis 6) zunehmende Stapel- bzw. Höhenniveaus gelangen.

19. Einrichtung nach Anspruch 18, dadurch gekennzeichnet, daß jede Führungsbahn (64) aus einem steuerbar verschwenkbaren Anfangsabschnitt (78), der in den Bewegungspfad der Führungsrolle (62) des hierdurch anzuhebenden, am Anfang der Transportgasse unten befindlichen Hubtisches (38) einschwenkbar ist, einem sich hieran anschließenden schräg ansteigenden Mittelabschnitt (80) entsprechender Steigung und einem sich hieran anschließenden horizontalen Endabschnitt (82) besteht.

20. Einrichtung nach Anspruch 19, dadurch gekennzeichnet, daß die Steigung der Führungsbahn (64) anfänglich allmählich zunimmt, dann konstant bleibt und schließlich allmählich bis zur Horizontalen abnimmt.

21. Einrichtung nach Anspruch 19 oder 20, dadurch gekennzeichnet, daß die Anfangsabschnitte (78) der Führungsbahnen (64) in Transportrichtung hintereinander in den Bewegungspfad der Führungsrollen (62) einschwenkbar sind.

22. Einrichtung nach einem der Ansprüche 19 bis 21, dadurch gekennzeichnet, daß die horizontalen Endabschnitte (82) der Führungsbahnen (64) etwa am Ende der Transportgasse enden und die Hubtische (38) während ihrer Rückführung für eine durch Schwerkraft und/oder durch zusätzliche Führungsbahnen bedingte Abwärtsbewegung auf das Niveau am Anfang der Transportgasse freigeben.

23. Einrichtung nach einem der Ansprüche 19 bis 22, dadurch gekennzeichnet, daß die Endabschnitte (82) bei gleichzeitiger entsprechender Neigungsänderung der daran angelenkten Mittelabschnitte (80) höhenverstellbar sind.

24. Einrichtung nach Anspruch 23, gekennzeichnet durch eine Verstellvorrichtung (84) zum bedarfsgerechten gleichzeitigen Verstellen aller Endabschnitte (82).

25. Einrichtung nach einem der Ansprüche 13 bis 24, dadurch gekennzeichnet, daß die Mittel zum Verlangsamen, Stapeln und Weitertransportieren der Stapelelemente (14) folgende Teile aufweisen:
a) Zumindest eine dynamische Anschlagvorrichtung (39) mit in Transportrichtung langsamer als die Hubtische (38) bewegten sowie im Bereich der Endabschnitte (82) der Führungsbahnen (64) in den Bewegungspfad der Stapelelemente (14) tretenden Anschlaggliedern (48);
b) ein die durch die Anschlagglieder (48) von den Hubtischen (38) geschobenen, zu stapelnden Stapelelemente (14) abstützendes, vorzugsweise schneller als die Anschlagglieder in Transportrichtung bewegtes, Förderglied (50), wie ein Förderband, als Verlängerung der Transportgasse.

26. Einrichtung nach Anspruch 25, dadurch gekennzeichnet, daß die Anschlagglieder (48) bei ihrer Bewegung in Transportrichtung von unten bis zu einem dem gerade zu stapelnden Stapelelement (14) entsprechenden Höhenniveau nach oben bewegbar sind.

27. Einrichtung nach Anspruch 25 oder 26, dadurch gekennzeichnet, daß die zumindest eine dynamische Anschlagvorrichtung (39) zumindest eine, vorzugsweise zwei beabstandete, um endseitige Kettenräder (42, 44) seitlich und unter der Transportgasse bzw. deren Verlängerung horizontal umlaufende endlose Transportketten (40) aufweist, an der bzw. zwischen denen vertikale stangenförmige Führungsglieder (46) für vertikal bewegbare Schlitten (68) mit den daran vorderseitig angebrachten Anschlaggliedern (48) befestigt sind.

28. Einrichtung nach Anspruch 27, dadurch gekennzeichnet, daß jeder Schlitten (68) wenigstens eine rückseitige Führungsrolle (70) oder dergleichen aufweist, wobei diese Führungsrollen zumindest während des Eingriffs der entsprechenden Anschlagglieder (48) in den Bewegungspfad der Stapelelemente (14) mit einer in Transportrichtung schräg ansteigenden, stationären und wahlweise neigungsvariabel einstellbaren Führungsbahn (72) der dynamischen Anschlagvorrichtung (39) in Hubeingriff stehen.

29. Einrichtung nach Anspruch 27 oder 28, dadurch gekennzeichnet, daß die Anschlagglieder (48) über Arme (66) an den Schlitten (68) befestigt sind und am Ende ihrer Hubbewegung bis zum Bereich der endseitigen Umlenkung durch einen horizontalen Abschnitt der Führungsbahn (72) geführt sind.

30. Einrichtung nach Anspruch 28 oder 29, dadurch gekennzeichnet, daß die Führungsbahn (72) nach der endseitigen Umlenkung endet und die Anschlagglieder (48) während ihrer Rückführung für eine durch Schwerkraft und/oder durch eine zusätzliche Führungsbahn bedingte Abwärtsbewegung freigibt.

31. Einrichtung nach einem der Ansprüche 25 bis 30, gekennzeichnet durch zwei mit Abstand nebeneinander angeordnete dynamische Anschlagvorrichtungen (39) mit jeweils gleichzeitig eingreifenden Anschlaggliedern (48).

32. Einrichtung nach einem der Ansprüche 13 bis 31, gekennzeichnet durch eine an der Übergabestelle (26) zu den Hubtischen (38) der Schrägförderer (28) angeordnete Vereinzelungs- und Übergabevorrichtung (16 bis 24).

33. Einrichtung nach einem der Ansprüche 13 bis 32, dadurch gekennzeichnet, daß die Vereinzelungs- sowie Übergabevorrichtung (16 bis 24), die Schrägförderer (28) sowie deren Führungsbahnumschaltung und die zumindest eine dynamische Anschlagvorrichtung (39), vorzugsweise auch das ausgangsseitige Förderglied (50), miteinander synchronisiert angetrieben sind.

34. Einrichtung nach einem der Ansprüche 13 bis 33, dadurch gekennzeichnet, daß der gegenseitige Abstand der Schrägförderer (28) und bei Vorhandensein zweier dynamischer Anschlagvorrichtungen (39) wahlweise auch deren gegenseitiger Abstand in Anpassung an die Breite der Stapelelemente (14) einstellbar sind.

## Claims

1. A method for stacking stackable elements (14) in groups, which elements are arranged one behind the other in an approximately horizontal transportation line (10) and are continuously advanced preferably at a first horizontal velocity (V₁) with their ends abutting, the respective following stackable element (14) of a stacking group (1 - 6) finally coming to rest upon the respective preceding stackable element (14) of said stacking group (1 - 6), characterised in that
a) the stackable elements (14) of each stacking group (1 to 6) are individually grasped from the transportation line (10) and are advanced at a second horizontal velocity (V₂), which can be approximately equal to or somewhat higher than the first horizontal velocity (V₁),
b) with the further advancement, at least the stackable elements to be placed on top of the first stackable element of each stacking group (1 - 6) are raised increasingly higher at least to vertical levels corresponding to their subsequent stacking heights, and
c) the second horizontal velocity (V₂) of the individual stackable elements of each stacking group (1 - 6) is reduced according to the successive sequence of said elements to a third horizontal velocity (V₃), the following stackable element in each case passing over the decelerated preceding stackable element and also being decelerated once said stackable elements are precisely superimposed and being deposited by being released onto the preceding stackable element.

2. A method according to claim 1, characterised in that the third horizontal velocity (V₃) is reduced as the number of stackable elements (14) of a stacking group (1 to 6) increases.

3. A method according to claim 2, characterised in that the third horizontal velocity (V₃) corresponds approximately to the second horizontal velocity (V₂) divided by the number of stackable elements (14) of a stacking group (1 to 6).

4. A method according to one of claims 1 to 3, characterised in that the stackable elements (14) of each stacking group (1 to 6) are grasped one after the other at a transfer station (26).

5. A method according to one of claims 1 to 4, characterised in that the stackable elements (14) of each stacking group (1 to 6) are raised over a given lifting distance at a maximum lifting velocity (V_{H}) increasing from stackable element to stackable element.

6. A method according to claim 5, characterised in that, after reaching their final vertical level, the stackable elements (14) are moved horizontally.

7. A method according to claim 5 or 6, characterised in that the lifting velocity (V_{H}) of the stackable elements (14) is initially gradually increased in each case and/or gradually reduced at the end of the lifting movement.

8. A method according to one of claims 1 to 7, characterised in that, during the stacking process, a plurality of stackable elements (14) of a stacking group and/or of two successive stacking groups are simultaneously raised in each case with a time overlap.

9. A method according to one of claims 1 to 8, characterised in that the maximum lifting velocity (V_{H}) is slower than the second horizontal velocity (V₂).

10. A method according to one of claims 1 to 9, characterised in that, before the stack formation of one stacking group (1 to 6) is completed, a directly adjacent stack formation of the next stacking group is begun.

11. A method according to one of claims 1 to 10, characterised in that the adjacent stacking groups (52) of stacked stackable elements (14) are advanced in succession at a fourth horizontal velocity (V₄), which can be approximately equal to or somewhat higher than the third horizontal velocity (V₃).

12. A method according to one of claims 1 to 11, characterised in that the horizontal and lifting velocities are adjusted and synchronised with one another, taking into account the size of the stackable elements (14) and their number per stacking group.

13. A device for carrying out the method according to one or more of claims 1 to 12, with conveying means for horizontally and vertically moving stackable elements (14) moved in a single-row transportation line (10), characterised by an inclined conveyor (28), but preferably two inclined conveyors (28) defining between them a transportation path, for successively laterally grasping, advancing and controllably simultaneously lifting the individual stackable elements (14) of each stacking group (1 to 6) to increasing stacking or vertical levels, and by means (48, 50) for successively decelerating the advancement of the stackable elements (14) once said elements reach their respective vertical stacking positions, for stacking the stackable elements (14) of each stacking group (1 to 6) one on top of the other by releasing said elements from the inclined conveyors (28), and for advancing the finished stacks (52).

14. A device according to claim 13, characterised in that each inclined conveyor (28) comprises a closed row of horizontally and vertically movable lifting tables (38), which are spaced apart, can be pivoted at the ends of the inclined conveyor about vertical axes into or out of the transportation path, and laterally support the stackable elements (14) in the transportation path.

15. A device according to claim 14, characterised in that each lifting table (38) is secured to a carriage (60), which is vertically displaceably held on at least one horizontally displaced guide member (36) of the inclined conveyor (28).

16. A device according to claim 15, characterised in that the lifting table (38) is angular and is pivotally mounted on the carriage (60) in such a manner that an approximately vertical lifting table section (56) enters into a lateral clamping engagement with the outwardly facing side of a stackable element (14) resting upon said lifting table as a result of the pivoting influence of the intrinsic weight of said stackable element.

17. A device according to claim 15 or 16, characterised in that the inclined conveyor (28) comprises at least one, but preferably two continuous transportation chains (30), which rotate horizontally about end-face chain gears (32, 34) and on or between which vertical, rod-shaped guide members (36) are secured for the carriages (60).

18. A device according to one of claims 15 to 17, characterised in that each carriage (60) comprises at least one rear-side guide roller (62) or the like, which engages, at least during the engagement of the lifting table (38) in the transportation path, in a controllable manner with stationary, but adjustable guide tracks (64) of the inclined conveyor (28), which tracks are at least partially upwardly inclined in the direction of transportation, the lifting tables (38) passing in each case from a level approximately of the transportation line (10) to stacking or vertical levels increasing in the stacking group (1 to 6).

19. A device according to claim 18, characterised in that each guide track (64) comprises a controllably pivotable starting section (78), which can be pivoted into the path of movement of the guide roller (62) of the lifting table (38), which is to be thereby lifted and is arranged at the bottom at the start of the transportation path, an adjoining, upwardly inclined central section (80) having a corresponding angle of inclination, and an adjoining horizontal end section (82).

20. A device according to claim 19, characterised in that the gradient of the guide track (64) initially gradually increases, then remains constant, and finally gradually decreases until the horizontal is reached.

21. A device according to claim 19 or 20, characterised in that the starting sections (78) of the guide tracks (64) can be pivoted one behind the other in the transportation direction into the path of movement of the guide rollers (62).

22. A device according to one of claims 19 to 21, characterised in that the horizontal end sections (82) of the guide tracks (64) end approximately at the end of the transportation path, and as they are guided back, the end sections release the lifting tables (38) for a downward movement, brought about by the force of gravity and/or by additional guide tracks, to the level at the start of the transportation path.

23. A device according to one of claims 19 to 22, characterised in that the end sections (82) are height-adjustable with a simultaneous corresponding change in the inclination of the central sections (80) articulatedly connected with the end sections.

24. A device according to claim 23, characterised by an adjusting device (84) for simultaneously adjusting all end sections (82) as required.

25. A device according to one of claims 13 to 24, characterised in that the means for decelerating, stacking and advancing the stackable elements (14) comprise the following parts:
a) at least one dynamic stop device (39) with stop members (48) displaced in the transportation direction at a slower speed than the lifting tables (38) and entering into the path of movement of the stackable elements (14) in the region of the end sections (82) of the guide tracks (64);
b) a conveying member (50), such as a conveyor belt, as an extension of the transportation path, which conveying member supports the stackable elements (14) which are to be stacked and which are pushed by the stop members (48) from the lifting tables (38), and is preferably displaced in the transportation direction at a higher speed than the stop members.

26. A device according to claim 25, characterised in that, during their movement in the transportation direction, the stop members (48) can be displaced upwards to a vertical level corresponding to the stackable element (14) about to be stacked.

27. A device according to claim 25 or 26, characterised in that the at least one dynamic stop device (39) comprises at least one, but preferably two spaced apart continuous transportation chains (40), which rotate laterally about end-side chain gears (42, 44) and horizontally beneath the transportation path or the extension thereof, on or between which transportation chains vertical rod-shaped guide members (46) are secured for vertically movable carriages (68) with the stop members (48) mounted on the front side thereof.

28. A device according to claim 27, characterised in that each carriage (68) comprises at least one rear-side guide roller (70) or the like, said guide rollers forming a lifting engagement, at least during the engagement of the corresponding stop members (48) in the path of movement of the stackable elements (14), with a stationary guide track (72) of the dynamic stop device (39), which guide track is upwardly inclined in the transportation direction and can be optionally adjusted in its angle of inclination.

29. A device according to claim 27 or 28, characterised in that the stop members (48) are secured via arms (66) to the carriages (68), and are guided at the end of their lifting movement up to the region of the end-side reversal by a horizontal section of the guide track (72).

30. A device according to claim 28 or 29, characterised in that the guide track (72) ends towards the end-side reversal, and as it is guided back, releases the stop elements (48) for a downward movement brought about by the force of gravity and/or an additional guide track.

31. A device according to one of claims 25 to 30, characterised by two dynamic stop devices (39) arranged adjacent one another and spaced apart, with simultaneously engaging stop members (48) in each case.

32. A device according to one of claims 13 to 31, characterised by an isolating and transfer device (16 to 24) arranged at the transfer station (26) to the lifting tables (38) of the inclined conveyors (28).

33. A device according to one of claims 13 to 32, characterised in that the isolating and transfer device (16 to 24), the inclined conveyors (28), their guide track reversal, the at least one dynamic stop device (39), and preferably the outlet-side conveying member (50) are driven in synchronisation with one another.

34. A device according to one of claims 13 to 33, characterised in that the distance between the inclined conveyors (28), and, in the case of two dynamic stop devices (39), optionally the distance between said stop devices, is/are adjustable as a function of the width of the stackable elements (14).

## Revendications

1. Procédé d'empilage par groupes d'éléments à empiler (14) placés les uns derrière les autres et de préférence avancés de façon continue, contigus, à une première vitesse horizontale (v₁), dans une ligne de transport à peu près horizontale (10), l'élément à empiler (14) suivant d'un groupe d'empilage (1 à 6) venant finalement se placer sur l'élément à empiler (14) précédent de ce groupe d'empilage (1 à 6), caractérisé par le fait
a) que les éléments à empiler (14) de chaque groupe d'empilage (1 à 6) sont, de la ligne de transport (10), saisis individuellement et avancés à une deuxième vitesse horizontale (v₂) qui correspond à peu près à la première (v₁) ou peut être un peu plus grande que celle-ci,
b) qu'au moins les éléments à empiler à appliquer sur le premier élément à empiler de chaque groupe d'empilage (1 à 6) sont, lors de l'avance, soulevés de façon croissante au moins à des niveaux correspondant à peu près à leurs hauteurs ultérieures d'empilage,
c) et que la deuxième vitesse horizontale (v₂) des différents éléments à empiler de chaque groupe d'empilage (1 à 6) est réduite successivement, d'après l'ordre de ceux-ci, à une troisième vitesse horizontale (v₃), l'élément à empiler suivant arrivant au-dessus de l'élément précédent ralenti et étant, lorsque ces éléments sont exactement l'un au-dessus de l'autre, également ralenti et déposé par libération sur l'élément à empiler précédent.

2. Procédé selon la revendication 1, caractérisé par le fait qu'on diminue la troisième vitesse horizontale (v₃) lorsque le nombre des éléments à empiler (14) d'un groupe d'empilage (1 à 6) augmente.

3. Procédé selon la revendication 2, caractérisé par le fait que la troisième vitesse horizontale (v₃) correspond à peu près au quotient de la deuxième vitesse horizontale (v₂) par le nombre des éléments à empiler (14) d'un groupe d'empilage (1 à 6).

4. Procédé selon l'une des revendications 1 à 3, caractérisé par le fait que les éléments à empiler (14) de chaque groupe d'empilage (1 à 6) sont saisis l'un après l'autre à un endroit de transfert (26).

5. Procédé selon l'une des revendications 1 à 4, caractérisé par le fait que les éléments à empiler (14) de chaque groupe d'empilage (1 à 6) sont soulevés sur une distance déterminée d'élévation à une vitesse maximale d'élévation (v_{H}) croissant d'un élément à empiler à l'autre.

6. Procédé selon la revendication 5, caractérisé par le fait que les éléments à empiler (14), après avoir atteint leur niveau final, sont mus horizontalement.

7. Procédé selon l'une des revendications 5 et 6, caractérisé par le fait que la vitesse d'élévation (v_{H}) de chacun des éléments à empiler (14) est au début augmentée progressivement et/ou réduite progressivement à la fin de l'élévation.

8. Procédé selon l'une des revendications 1 à 7, caractérisé par le fait que lors de l'empilage, plusieurs éléments à empiler (14) d'un groupe d'empilage et/ou de deux groupes d'empilage successifs sont soulevés simultanément avec chevauchement dans le temps.

9. Procédé selon l'une des revendications 1 à 8, caractérisé par le fait que la vitesse maximale d'élévation (v_{H}) est inférieure à la deuxième vitesse horizontale (v₂).

10. Procédé selon l'une des revendications 1 à 9, caractérisé par le fait que la formation de pile d'un groupe d'empilage (1 à 6) est amorcée avant l'achèvement de la formation de pile immédiatement voisine du groupe d'empilage précédent.

11. Procédé selon l'une des revendications 1 à 10, caractérisé par le fait que les groupes d'empilage voisins (52) d'éléments (14) empilés sont avancés l'un après l'autre à une quatrième vitesse horizontale (v₄) qui peut correspondre à peu près à la troisième (v₃) ou être un peu plus grande que celle-ci.

12. Procédé selon l'une des revendications 1 à 11, caractérisé par le fait que les vitesses horizontales et d'élévation sont réglées en fonction des dimensions des éléments à empiler (14) et de leur nombre par groupe d'empilage et mutuellement synchronisées.

13. Dispositif pour la mise en oeuvre du procédé selon une ou plusieurs des revendications 1 à 12, comportant des moyens de transport pour le déplacement horizontal et vertical d'éléments à empiler (14) mus dans une ligne de transport à une seule file (10), caractérisé par un, de préférence deux transporteurs inclinés (28) délimitant entre eux une ruelle de transport, pour la saisie latérale successive, l'avance et le soulèvement simultané commandable des éléments à empiler (14), isolés, de chaque groupe d'empilage (1 à 6) à des niveaux d'empilage croissants, et par des moyens (48, 50) de ralentissement successif de l'avance des éléments à empiler (14) après qu'ils ont atteint leurs positions verticales respectives d'empilage ainsi que d'empilage des éléments à empiler (14) de chaque groupe d'empilage (1 à 6) par libération de ceux-ci des transporteurs inclinés (28) et d'évacuation des piles terminées (52).

14. Dispositif selon la revendication 13, caractérisé par le fait que chaque transporteur incliné (28) présente une file fermée de tables élévatrices (38) espacées mutuellement et mobiles horizontalement et verticalement qui peuvent, aux extrémités du transporteur incliné (28), respectivement entrer dans la ruelle de transport et en sortir en pivotant autour d'axes verticaux et supportent latéralement les éléments à empiler (14) dans la ruelle de transport.

15. Dispositif selon la revendication 14, caractérisé par le fait que chaque table élévatrice (38) est fixée à un chariot (60) qui est monté mobile verticalement sur au moins un élément de guidage mû horizontalement (36) du transporteur incliné (28).

16. Dispositif selon la revendication 15, caractérisé par le fait que la table élévatrice (38) est en équerre et montée basculante sur le chariot (60) de façon telle qu'une partie à peu près verticale (56) de celle-ci, sous l'influence, produisant un basculement, du poids propre de l'élément à empiler (14) posé, vienne en prise latérale de serrage avec le côté de celui-ci dirigé vers l'extérieur.

17. Dispositif selon l'une des revendications 15 et 16, caractérisé par le fait que le transporteur incliné (28) présente au moins une, de préférence deux chaînes transporteuses sans fin (30) tournant horizontalement autour de roues à chaîne d'extrémité (32, 34), à laquelle ou entre lesquelles sont fixés des éléments de guidage verticaux en forme de barre (36) pour les chariots (60).

18. Dispositif selon l'une des revendications 15 à 17, caractérisé par le fait que chaque chariot (60) présente au moins un galet arrière de guidage (62) ou' un élément semblable qui, au moins pendant que la table élévatrice (38) est engagée dans la ruelle de transport, est en prise de façon commandable avec des chemins de guidage au moins en partie montant obliquement dans la direction de transport, fixes mais déplaçables (64) du transporteur incliné (28), les tables élévatrices (38) allant respectivement à peu près du niveau de la ligne de transport (10) à des niveaux d'empilage croissant dans le groupe d'empilage (1 à 6).

19. Dispositif selon la revendication 18, caractérisé par le fait que chaque chemin de guidage (64) est constitué d'un tronçon initial (78) pouvant basculer de façon commandée qui peut être basculé de façon à couper la trajectoire du galet de guidage (62) de la table élévatrice (38) à soulever par celui-ci située en bas au début de la ruelle de transport, d'un tronçon médian montant obliquement (80) faisant suite au précédent et de pente appropriée, et d'un tronçon final horizontal (82) faisant suite à ce dernier.

20. Dispositif selon la revendication 19, caractérisé par le fait que la pente du chemin de guidage (64), au début, augmente progressivement, puis reste constante et, à la fin, diminue progressivement jusqu'à l'horizontale.

21. Dispositif selon l'une des revendications 19 et 20, caractérisé par le fait que les tronçons initiaux (78) des chemins de guidage (64) peuvent être basculés l'un derrière l'autre dans la direction de transport de façon à couper la trajectoire des galets de guidage (62).

22. Dispositif selon l'une des revendications 19 à 21, caractérisé par le fait que les tronçons finals horizontaux (82) des chemins de guidage (64) se terminent à peu près à l'extrémité de la ruelle de transport et libèrent les tables élévatrices (38) pendant leur retour pour une descente, produite par gravité et/ou par des chemins de guidage supplémentaires, au niveau au début de la ruelle de transport.

23. Dispositif selon l'une des revendications 19 à 22, caractérisé par le fait que les tronçons finals (82) peuvent être déplacés verticalement avec en même temps changement correspondant d'inclinaison des tronçons médians (80), articulés à eux.

24. Dispositif selon la revendication 23, caractérisé par un dispositif de réglage (84) pour le déplacement simultané de tous les tronçons finals (82) suivant les besoins.

25. Dispositif selon l'une des revendicxations 13 à 24, caractérisé par le fait que les moyens de ralentissement, d'empilage et d'évacuation des éléments à empiler (14) présentent les éléments suivants :
a) au moins un dispositif de butée dynamique (39) comportant des éléments de butée (48) mus dans la direction de transport plus lentement que les tables élévatrices (38) et venant, dans la zone des tronçons finals (82) des chemins de guidage (64), sur la trajectoire des éléments à empiler (14),
b) comme prolongement de la ruelle de transport, un élément transporteur (50), comme une bande transporteuse, supportant les éléments à empiler (14) glissés des tables élévatrices (38) par les éléments de butée (48) et de préférence mû plus vite que ceux-ci dans la direction de transport.

26. Dispositif selon la revendication 25, caractérisé par le fait que les éléments de butée (48) sont, lors de leur mouvement dans la direction de transport, mus d'en bas vers le haut jusqu'à un niveau correspondant à l'élément à empiler (14).

27. Dispositif selon l'une des revendications 25 et 26, caractérisé par le fait que le ou chaque dispositif de butée dynamique (39) présente au moins une, de préférence deux chaînes transporteuses sans fin espacées (40) tournant horizontalement, latéralement et sous la ruelle de transport et son prolongement, autour de roues à chaîne d'extrémité (42, 44), à laquelle ou entre lesquelles sont fixés des éléments de guidage verticaux en forme de barre (46) pour des chariots mobiles verticalement (68) sur le côté avant desquels sont montés les éléments de butée (48).

28. Dispositif selon la revendication 27, caractérisé par le fait que chaque chariot (68) présente au moins un galet arrière de guidage (70) ou un élément semblable, les galets de guidage (70), au moins pendant que les éléments de butée (48) correspondants sont engagés dans la trajectoire des éléments à empiler (14), étant en prise d'élévation avec un chemin de guidage montant obliquement, fixe et éventuellement d'inclinaison réglable (72) du dispositif de butée dynamique (39).

29. Dispositif selon l'une des revendications 27 et 28, caractérisé par le fait que les éléments de butée (48) sont fixés aux chariots (68) par l'intermédiaire de bras (66) et, à la fin de leur élévation, sont guidés jusqu'à la zone du renvoi d'extrémité par un tronçon horizontal du chemin de guidage (72).

30. Dispositif selon l'une des revendications 28 et 29, caractérisé par le fait que le chemin de guidage (72) se termine après le renvoi d'extrémité et libère les éléments de butée (48) pendant leur retour pour une descente produite par gravité et/ou par un chemin de guidage supplémentaire.

31. Dispositif selon l'une des revendications 25 à 30, caractérisé par deux dispositifs de butée dynamiques (39) placés à distance l'un à côté de l'autre et à éléments de butée (48) venant en prise simultanément.

32. Dispositif selon l'une des revendications 13 à 31, caractérisé par un dispositif d'isolement et de transfert (16 à 24) placé à l'endroit (26) de transfert aux tables élévatrices (38) des transporteurs inclinés (28).

33. Dispositif selon l'une des revendications 13 à 32, caractérisé par le fait que le dispositif d'isolement et de transfert (16 à 24), les transporteurs inclinés (28) ainsi que leur commutation de chemins de guidage et le ou les dispositifs de butée dynamiques (39), et de préférence également l'élément transporteur côté sortie (50), sont actionnés en synchronisme.

34. Dispositif selon l'une des revendications 13 à 33, caractérisé par le fait que l'écartement des transporteurs inclinés (28) et, en cas d'existence de deux dispositifs de butée dynamiques (39), éventuellement aussi l'écartement de ceux-ci sont réglables de façon à pouvoir être adaptés à la largeur des éléments à empiler (14).
